# EUROPÄISCHE PATENTANMELDUNG

(11) **EP 0 891 942 A1**
(43) Veröffentlichungstag der Anmeldung: **20.01.1999**
(21) Anmeldenummer: 98112341.7
(22) Anmeldetag: 03.07.1998
(51) Int. Cl.: C01B 25/10

(54) **Verfahren zur Reinigung von Phosphoroxychlorid**

(30) Priorität: 15.07.1997 DE 19730224
(71) Anmelder: BAYER AG, 51368 Leverkusen (DE)
(72) Erfinder: Mais, Franz-Josef, Dr., 40591 Düsseldorf (DE); Fiege, Helmut, Dr., 51373 Leverkusen (DE)

(57) **Zusammenfassung**

Verunreinigtes POCl₃ wird durch Destillation in Gegenwart von hochsiedenden Stickstoffverbindungen aus der Gruppe der substituierten Pyridine und Pyrimidine, der offenkettigen und cyclischen aliphatischen Amine, der offenkettigen und cyclischen Amidine, der Guanidine und der aromatischen Amine gereinigt.

## Beschreibung

Die vorliegende Erfindung betrifft ein Verfahren zur Reinigung von verunreinigtem Phosphoroxychlorid (POCl₃), das bei der Herstellung von Phosphorestern zu Produkten mit erhöhter Farbzahl führen würde. Im besonderen werden Verfahren zur Reinigung von verunreinigtem POCl₃ beschrieben, das als Co-Produkt bei der Herstellung von chlorierten Stickstoffheterocyclen gebildet wird.

Die Herstellung von chlorierten N-Heterocyclen, beispielsweise von Polychlorpyrimidinen durch Umsetzung der entsprechenden Polyhydroxypyrimidine mit PCl₅ bzw. PCl₃ + Cl₂ ist in zahlreichen Patentanmeldungen beschrieben, z.B. EP 697 406, WO 96/23776, EP 745 593 oder EP 761 653. Bei dieser Umsetzung fällt neben den chlorierten Heterocyclen auch POCl₃ als Co-Produkt in zur Anzahl der eingeführten Chloratome äquivalenten Mengen an. Der Einsatz dieses POCl₃ für weitere Synthesen ist aus ökonomischer und ökologischer Sicht zwingend notwendig.

POCl₃ wird in der chemischen Industrie u.a. als Zwischenprodukt zur Herstellung von aliphatischen oder aromatischen Phosphaten eingesetzt. Um verwendbar zu sein, beispielsweise als Hilfsmittel in der Kunststoff- oder Photoindustrie, dürfen diese Phosphate keine Eigenfarbe besitzen. Abhängig von dem jeweiligen Verfahren z.B. zur Herstellung von polychlorierten Pyrimidinen ist das dabei gewonnene POCl₃ soweit verunreinigt, daß es nicht zur Synthese uneingeschränkt verwendbarer Phosphorester brauchbar ist. Beispielsweise können in dem durch Destillation abgetrennten POCl₃ ähnlich siedende Verunreinigungen, die Kohlenstoff, Chlor, Sauerstoff oder Stickstoff enthalten, vorliegen. Diese Verunreinigungen führen zur Erhöhung der Farbzahl bei der Phosphorestersynthese. Auch eine Redestillation des verunreinigten POCl₃, selbst über leistungsfähige Kolonnen, führt zu keiner befriedigenden Entfernung der Verunreinigungen. Es ist daher ein Verfahren erforderlich, mit dem die Qualität des POCl₃ soweit verbessert werden kann, daß es zur Herstellung von Phosphorestern uneingeschränkt verwendbar ist.

Es wurde ein Verfahren zur Reinigung von POCl₃ gefunden, das dadurch gekennzeichnet ist, daß man das verunreinigte POCl₃ in Gegenwart von hochsiedenden Stickstoffverbindungen aus der Gruppe der substituierten Pyridine und Pyrimidine, der offenkettigen und cyclischen aliphatischen Amine, der offenkettigen und cyclischen Amidine, der Guanidine und der aromatischen Amine destilliert.

Die Reinigung betrifft insbesondere POCl₃ aus der Synthese von chlorierten N-Heterocyclen.

Als Stickstoffverbindungen sind erfindungsgemäß solche einsetzbar, die ausreichend hoch im Siedepunkt sind und bei der erfindungsgemäßen Destillation nicht oder nur in Spuren als neue Verunreinigungen im POCl₃-Destillat auftauchen. Dies sind erfindungsgemäß Stickstoffverbindungen mit einem Siedepunkt >140°C, bevorzugt >170°C, besonders bevorzugt >200°C (alle Angaben bei Normaldruck). Zur einfachen Handhabung soll ihr Schmelzpunkt bei höchstens 60°C, bevorzugt höchstens 40°C liegen.

Als Beispiel seien genannt: Alkylpyridine oder mehrfach alkylierte Pyridine, wie 4-Methylpyridin, 4-tert.-Butylpyridine, verschiedene stellungsisomere Dimethylpyridine, trialkylierte Pyridine, wie z.B. 2,4,6-Trimethylpyridin usw., durch Arylgruppen substituierte Pyridine wie z.B. 2-, 3- oder 4-Phenylpyridin, die stellungsisomeren Diphenylpyridine oder Triphenylpyridine wie z.B. 2,4,6-Triphenylpyridin usw., durch anellierte Ringe substituierte Pyridine, wie z.B. Chinolin, Isochinolin, Acridin. Diese genannten Systeme können durch weitere Substituenten derivatisiert sein. Als Beispiel seien genannt Chinaldin oder p-Hydroxychinolin. Weiter erfindungsgemäß sind Oligo- und Polypyridinderivate einsetzbar, beispielsweise 2,2'-Bipyridyl, 3,3'-Bipyridyl, 4,4'-Bipyridyl, 2,4'-Bipyridyl, 2,6-Bis(2-pyridyl)-pyridin, usw. Weitere Beispiele für erfindungsgemäße Pyridinderivate sind durch Aminogruppen substituierte Pyridine, beispielsweise 4-Aminopyridin, 4-Dimethylaminopyridin usw. Es sind auch gemischt Alkyl, Aryl, Amino und durch anellierte Ringe substituierte Pyridin- oder Oligo- bzw. Polypyridin-Derivate einsetzbar.

Beispiele für weitere erfindungsgemäß einsetzbare hochsiedende Stickstoffverbindungen sind die den genannten Pyridinen entsprechenden Pyrimidine.

Weitere Beispiele sind: offenkettige und cyclische aliphatische Amine, offenkettige und cyclischen Amidine oder Guanidine, wie Trioctylamin, Triisobutylamin, Alkylpiperidine, Diaza-bicyclo-nonan (DBN), Diazabicyclo-undecan (DBU), Tetramethylguanidin und analoge Stickstoffverbindungen mit geeigneten Siedepunkten. Schließlich kommen aromatische Amine, wie Anilin, N-Methyl-anilin und analoge in Frage.

Erfindungsgemäß ist eine einzelne Stickstoffverbindung oder auch ein Gemisch mehrerer von ihnen einsetzbar. Bevorzugte Stickstoffverbindungen sind Pyridinderivate bzw. offenkettige oder cyclische Amidine oder Guanidine.

Erfindungsgemäß ist bei diskontinuierlicher Fahrweise der Zusatz von Stickstoffverbindung zum verunreinigten POCl₃ kleiner als 10 Gew.-%, bevorzugt kleiner als 5 Gew.-%, besonders bevorzugt kleiner als 1 Gew.-%. Es ist allerdings auch möglich, mehr als 10 % einzusetzen, wobei dann in kontinuierlicher oder halbkontinuierlicher Form die hochsiedende Stickstoffverbindung als Destillationssumpf mehrmals benutzt bzw. recyclisiert werden kann.

Die erfindungsgemäße Destillation kann bei erhöhten, erniedrigten oder Normaldruck durchgeführt werden, bevorzugt ist Normaldruck. Das Verfahren ist diskontinuierlich oder kontinuierlich durchführbar.

Die erfindungsgemäße Destillation kann in verschiedenen Ausführungsformen durchgeführt werden. Als Beispiel kann das verunreinigte POCl₃ vorgelegt werden. Dann rührt man die erfindungsgemäße(n) Stickstoffverbindung(en) ein: Danach wird über eine Kolonne das gereinigte POCl₃ abdestilliert. Beim Einsatz von Stickstoffverbindungen im Siedepunktbereich von 140 bis 200°C ist die Verwendung einer leistungsfähigen Kolonne zur Vermeidung von Stickstoffverbindungen im POCl₃-Destillat vorteilhaft. Bei über 200°C liegenden Siedepunkten der Stickstoffverbindungen sind weniger leistungsfähige Trennkolonnen bereits ausreichend. Es ist jedoch auch möglich, die Stickstoffverbindung vorzulegen und dann das verunreinigte POCl₃ zuzugeben und erfindungsgemäß aus dem Gemisch abzudestillieren. Hierbei wird vorteilhafterweise eine größere Menge Stickstoffverbindung, z.B. 10 Gew.-% oder mehr, bezogen auf die Menge an POCl₃, beispielsweise bis zu 50 oder gar 100 Gew.-%, vorgelegt. Ersetzt man hierbei absatzweise oder laufend das abdestillierte POCl₃ durch weiteres verunreinigtes, kann das Verfahren kontinuierlich betrieben werden, bis der Sumpf so viel an Verunreinigungen enthält, daß diese in das Destillat durchschlagen. Erschöpfte Stickstollverbindung wird fachgerecht entsorgt, z.B. durch Verbrennen mit Rauchgasbehandlung. Schließlich können verunreinigtes POCl₃ und Stickstoffverbindung im gewählten Gewichtsverhältnis gemeinsam oder getrennt in eine kontinuierlich betriebene Destillationskolonne eingespeist werden, wobei das gereinigte Destillat als Kopfprodukt und die Stickstoffverbindung als Sumpfprodukt entnommen werden. Das Sumpfprodukt wird recyclisiert und erneut als Stickstoffverbindung eingespeist; ein kleiner Teil des Sumpfes wird entnommen, entsorgt und durch frische Stickstoffverbindung ersetzt. Bei getrennter Einspeisung wird die Stickstoffverbindung bevorzugt oberhalb des POCl₃ eingespeist.

Die folgenden Beispiele verdeutlichen das erfindungsgemäße Verfahren ohne es darauf einzuschränken.

### Beispiel A

### Herstellung von Trikresylphosphaten (aromatisches Phosphat) aus POCl₃ zur Farbzahlbestimmung

Ein Gemisch aus 200 g m-Kresol, 80 g p-Kresol und 50 g Phenol wird mit 0,1 g MgO versetzt und unter Rühren mit 153,5 g des zu prüfenden POCl₃ versetzt. Danach erhitzt man unter Rühren (HCl-Entwicklung) 10 h auf 330 bis 340°C Innentemperatur. Anschließend kühlt man leicht ab und destilliert bei 10 mbar. Im Bereich von 230 bis 270°C Kopftemperatur geht das Produkt über. Dieser Hauptlauf wird bei 60°C 2mal mit je 100 ml 0,1n NaOH und 2mal mit 100 ml Wasser gewaschen. Die feuchte Trikresylphosphatphase wird dann bei ∼100°C im Wasserstrahlvakuum getrocknet. Von dem getrockneten aromatischen Phosphat wird die Farbzahl bestimmt.

### Beispiel B

### Herstellung von Trichlorpropylphosphat (aliphatisches Phosphat) aus POCl₃ zur Farbzahlbestimmung

153,5 g des zu prüfenden POCl₃ werden vorgelegt und bei Raumtemperatur mit 0,8 g TiCl₄ versetzt. Danach tropft man im Verlaufe von 1 h 232 ml Propylenoxid zu. Die Innentemperatur wird durch Außenkühlung bei ∼80°C gehalten. Dann rührt man 1 h bei 80°C und legt am Schluß Wasserstrahlvakuum zur Entfernung von Propylenoxidresten an. Danach wird bei 80°C 1mal mit 100 ml 0,1n HCl, 1 mal mit 100 ml Wasser, 1 mal mit 0,1n NaOH und 1mal mit 100 ml Wasser gewaschen. Am Schluß legt man Wasserstrahlvakuum bei ∼90 bis 100°C zur Trocknung des Produktes an. Die Farbzahl wird von dem getrockneten aliphatischen Phosphat bestimmt.

### Beispiel 1

153 g eines POCl₃-Destillates aus der Produktion von Dichlorpyrimidinen, das nach Beispiel A) eine Farbzahl von 180 Hazen und nach Beispiel B) eine Farbzahl von 380 Hazen aufwies, wurde mit 1,0 Gew.-% Chinolin versetzt und 1 h am Rückfluß gekocht. Anschließend destillierte man über eine 10 cm lange Kolonne 144 g farbloses Destillat bei Normaldruck (Kopftemperatur bei 106°C) ab. Die Farbzahl nach Beispiel B) betrug 40 Hazen, nach Beispiel A) 20 Hazen.

### Beispiel 2

Wiederholung des Beispiels 1 mit 1,0 Gew.-% Chinaldin anstelle von Chinolin ergaben 145 g farbloses POCl₃-Destillat das nach Beispiel B) 35 Hazen als Farbzahl ergab.

### Beispiel 3

1000 g POCl₃ des Beispiels 1 wurden mit 10 g Collidin versetzt und über eine 1 m lange Füllkörperkolonne bei Normaldruck (Kopftemperatur ca. 105°C) destilliert. Man erhielt 955 g eines farblosen Destillates. Die Farbzahlbestimmung nach Beispiel A) ergab 15 Hazen, nach Beispiel B) 25 Hazen.

### Beispiele 4 bis 6

153 g eines POCl₃-Destillates aus der Produktion von Dichlorpyrimidinen, das nach Beispiel B) 430 Hazen als Farbzahl aufwies wurde jeweils mit 1,0 Gew.-% 4-Phenylpyridin, 4-Dimethylaminopyridin oder 2,2'-Dipyridyl versetzt. Nach der Destillation analog Beispiel 1 erhielt man bei Farbzahlbestimmungen nach Beispiel B) 35 Hazen, 30 Hazen und 45 Hazen.

### Beispiel 7

500 g eines POCl₃-Destillates aus der Produktion von Trichlorpyyrimidin, das nach Beispiel B) 280 Hazen als Farbzahl aufwies, wurde analog Beispiel 1 mit 1,0 Gew.-% Chinolin gereinigt. Nach der Destillation betrug die Farbzahl nach Beispiel B) 20 Hazen.

## Patentansprüche

1. Verfahren zur Reinigung von POCl₃, dadurch gekennzeichnet, daß man das verunreinigte POCl₃ in Gegenwart von hochsiedenden Stickstoffverbindungen aus der Gruppe der substituierten Pyridine und Pyrimidine, der offenkettigen und cyclischen aliphatischen Amine, der offenkettigen und cyclischen Amidine, der Guanidine und der aromatischen Amine destilliert.

2. Verfahren nach Anspruch 1, dadurch gekennzeichnet, daß ein POCl₃ eingesetzt wird, das bei der Herstellung von chlorierten N-Heterocyclen als Co-Produkt erhalten wurde.

3. Verfahren nach Ansprüchen 1 und 2, dadurch gekennzeichnet, daß die Stickstoffverbindungen einen Siedepunkt >140°C bei Normaldruck aufweisen.

4. Verfahren nach Ansprüchen 1 bis 3, dadurch gekennzeichnet, daß als Stickstoffverbindurgen Pyridinderivate eingesetzt werden.

5. Verfahren nach Ansprüchen 1 bis 3, dadurch gekennzeichnet, daß als Stickstoffverbindungen offenkettige oder cyclische Amidine oder Guanidine eingesetzt werden.

6. Verfahren nach Ansprüchen 1 bis 5, dadurch gekennzeichnet, daß bei diskontinuierlicher Fahrweise weniger als 10 Gew.-% Stickstoffverbindungen, bezogen auf die Menge an zu reinigendem POCl₃ eingesetzt werden.

7. Verfahren nach Anspruch 1 bis 5, dadurch gekennzeichnet, daß bei kontinuierlicher Fahrweise 10 bis 100 Gew.-% Stickstoffverbindungen, bezogen auf die Menge an POCl₃, eingesetzt werden und die Stickstoffverbindungen bis zu ihrer Erschöpfung zur Reinigung von weiterem POCl₃ benutzt bzw. recyclisiert werden.
